# FASCICULE DE BREVET EUROPEEN

(11) **EP 0 591 372 B1**
(45) Date de publication et mention de la délivrance du brevet: **01.02.1995**
(21) Numéro de dépôt: 92913916.0
(22) Date de dépôt: 25.06.1992
(51) Int. Cl.: B01D 63/08, B01D 69/10

(54) **UNITE DE FILTRATION INORGANIQUE**
Anorganische Filtrationseinheit
INORGANIC FILTRATION UNIT

(30) Priorité: 25.06.1991 FR 9108136
(43) Date de publication de la demande: 13.04.1994
(73) Titulaire: T.A.M.I. INDUSTRIES, F-26110 Nyons (FR)
(72) Inventeur: Lescoche, Philippe, F-26110 Nyons (FR)
(74) Mandataire: Thibault, Jean-Marc
(86) Numéro de dépôt international: FR9200587
(87) Numéro de publication internationale: WO9300154

(56) Documents cités:
- EP-A- 0 320 033
- FR-A- 1 563 313
- FR-A- 2 061 934
- GB-A- 395 871
- GB-A- 1 557 899
- US-A- 3 993 566

## Description

La présente invention concerne le domaine technique de la séparation moléculaire ou particulaire mettant en oeuvre des éléments de séparation, appelés habituellement membranes et constituées à partir de matériaux inorganiques.

L'objet de l'invention vise, plus précisément, la réalisation d'une unité de filtration inorganique permettant de concentrer, trier ou extraire des espèces moléculaires ou particulaires contenues dans un milieu liquide qui exerce une pression donnée sur la membrane.

L'objet de l'invention trouve une application particulièrement avantageuse dans le domaine de la nanofiltration, l'ultrafiltration, la microfiltration, la filtration ou l'osmose inverse.

Les membranes minérales actuellement commercialisées sont principalement de forme tubulaire.

Une membrane minérale est constituée d'un support poreux réalisé sous la forme d'un tube dont la surface interne est pourvue d'au moins une couche séparatrice, dont la nature et la morphologie sont adaptées pour assurer la séparation des molécules ou des particules contenues dans le milieu liquide circulant à l'intérieur du tube. Les membranes minérales présentent la particularité de posséder des valeurs élevées de résistance mécanique et de présenter une stabilité thermique et chimique. Les membranes minérales montrent, ainsi, une stabilité et des performances qui sont bien supérieures à celles présentées par l'autre catégorie de membranes, à savoir les membranes organiques.

Cependant, bien que la durée de vie d'une membrane minérale soit supérieure à celle d'une membrane organique, le prix de revient d'une membrane inorganique est largement supérieur à celui d'une membrane organique. En effet, la fabrication des membranes minérales s'effectue de manière discontinue et nécessite de réaliser un support poreux qui implique la mise en oeuvre d'outillages spécifiques en vue de leur donner leur forme particulière cylindrique. Par ailleurs, étant donné que pendant l'opération de filtration, la pression tend à faire éclater le support tubulaire, il convient de réaliser le support poreux avec une paroi épaisse et de mettre en oeuvre un frittage important pour maintenir l'intégrité d'une telle membrane.

L'état de la technique a proposé par le brevet **FR-2 061 934,** un bloc de filtration de nature minérale comportant un élément assurant la circulation du milieu liquide à travers un premier réseau de canaux, parallèles entre eux, de section circulaire et aménagés sur cet élément et un élément de filtration. La surface des canaux est recouverte d'une couche séparatrice assurant la filtration d'un milieu liquide circulant à l'intérieur des canaux. Le bloc poreux est aménagé pour présenter un élément de filtration comportant un second réseau de canaux de section circulaire, destinés à récupérer le filtrat ayant traversé le support poreux à partir de la couche séparatrice.

Le bloc de filtration décrit par ce brevet présente un premier inconvénient ayant trait à son impossibilité de présenter une forte surface d'échange, de faibles diamètres hydrauliques et une simplicité de réalisation. Il est rappelé qu'un faible diamètre hydraulique permet d'obtenir des gradients de vitesse importants et, par suite, des forces de frottement élevées, de manière à réaliser un excellent décolmatage de la membrane. De ce fait, la réalisation d'un bloc performant conduirait donc à réaliser, d'une part, des canaux dans lesquels circule le fluide à traiter, présentant un diamètre faible, par exemple, compris entre 1 et 6 mm, en vue d'obtenir un décolmatage convenable et, d'autre part, des canaux de récupération du filtrat en nombre et en diamètre, respectivement de l'ordre de grandeur de ceux des canaux dans lesquels circule le fluide à traiter, afin que le trajet du filtrat à l'intérieur du bloc soit le plus faible et le plus régulier possibles. Or, le nombre important de canaux, dans lesquels circule le fluide à traiter, conduit à un nombre aussi élevé de parois de séparation des canaux entre eux. Ces parois de séparation, qui constituent des surfaces d'échange perdues, doivent présenter une épaisseur suffisante en dessous de laquelle il apparaît délicat de réaliser simplement l'étanchéité. Il s'ensuit que la diminution du diamètre hydraulique des canaux de filtration entraîne une perte de la surface d'échange d'un tel bloc de filtration et une complexité importante de réalisation.

Un autre inconvénient du bloc de filtration décrit par ce brevet concerne sa résistance hydraulique relativement élevée. D'une manière générale, la perte de charge des surfaces filtrantes dépend de la longueur moyenne du trajet parcouru par le filtrat à l'intérieur du bloc poreux. Or, il apparaît qu'un tel trajet est relativement long en raison, d'une part, de son inclinaison par rapport à la normale, afin d'éviter les parois de liaison entre deux canaux de récupération et, d'autre part, du profil circulaire des canaux qui entraîne nécessairement une longueur du trajet du perméat, à l'intérieur du bloc, variable en chaque point de la surface d'échange. La perte de charge et, par suite, la résistance hydraulique présentée par un tel bloc, ne permettent pas d'obtenir un élément de filtration avec un débit de filtration performant.

La présente invention vise à remédier aux inconvénients énoncés ci-dessus en proposant une unité de filtration inorganique présentant une surface importante de filtration par unité de volume de la membrane et une faible résistance hydraulique de la surface filtrante, de manière à disposer d'une unité de filtration possédant un débit de filtration important.

L'unité de filtration inorganique selon l'invention comporte :
- au moins un élément de filtration inorganique composé :
   . d'un support poreux rigide inorganique présentant une face recouverte par au moins une couche séparatrice destinée à être en contact avec le milieu liquide qui exerce sur celle-ci une pression donnée,
   . d'un élément de contre-poussée exerçant, sur le support, une pression antagoniste et sensiblement équivalente à celle appliquée sur la couche séparatrice,
   . et d'au moins une cavité ménagée dans le support poreux à distance de la couche séparatrice et destinée à récupérer le filtrat ayant traversé le support poreux à partir de la couche séparatrice,
- et au moins un élément permettant la circulation du milieu liquide.

Selon l'invention, l'unité de filtration est caractérisée en ce que :
- le support poreux présente une face plane recouverte par la ou les couches séparatrices liées entre elles et au support poreux par frittage,
- et en ce que l'élément permettant la circulation du milieu liquide détermine, avec la face plane de l'élément de filtration, une lame liquide de hauteur comprise entre 0,1 et 3 mm et, de préférence, entre 0,2 et 1,5 mm.

Selon une caractéristique avantageuse, les canaux communiquent entre eux pour former un réseau entrecoisé de récupération du filtrat.

De préférence, l'élément de contre-poussée applique la pression antagoniste par l'intermédiaire d'appuis délimitant la cavité entre le support et l'élément de contre-poussée.

Selon une forme de réalisation particulièrement avantageuse de l'invention, la membrane comporte un élément de contre-poussée qui constitue un support poreux complémentaire présentant une face externe principale pourvue d'au moins une couche séparatrice destinée à être en contact avec le milieu liquide à filtrer qui exerce sur celle-ci la pression antagoniste, permettant de récupérer le filtrat ayant traversé les deux supports à partir des couches séparatrices correspondantes. Une telle membrane travaille en compression dans la mesure où la pression du milieu liquide s'exerce sur les deux couches séparatrices placées de part et d'autre du support poreux. Cette forme de réalisation permet de réaliser un support poreux présentant une épaisseur faible. D'une manière avantageuse, le support poreux complémentaire est identique au support poreux et se trouve rapporté de manière symétrique sur le support poreux.

Selon une autre forme de réalisation avantageuse, le support poreux complémentaire peut faire partie intégrante du support poreux, de sorte que la membrane se présente sous la forme d'un élément monobloc comportant deux faces planes opposées susceptibles de recevoir chacune une couche séparatrice.

Les supports poreux constitutifs de la membrane selon l'invention, présentent une forme générale plane, de sorte qu'ils peuvent être assemblés entre eux par l'intermédiaire de moyens de montage pour constituer une unité de filtration de dimensions adaptées aux conditions de filtration à respecter.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une vue en perspective d'un premier mode de réalisation d'une membrane minérale conforme à l'invention.

La **fig. 2** est une vue en coupe montrant la réalisation d'une membrane à double filtration réalisée à partir du mode de réalisation de la **fig. 1**.

La **fig. 3** est une vue en perspective montrant une caractéristique avantageuse de l'invention.

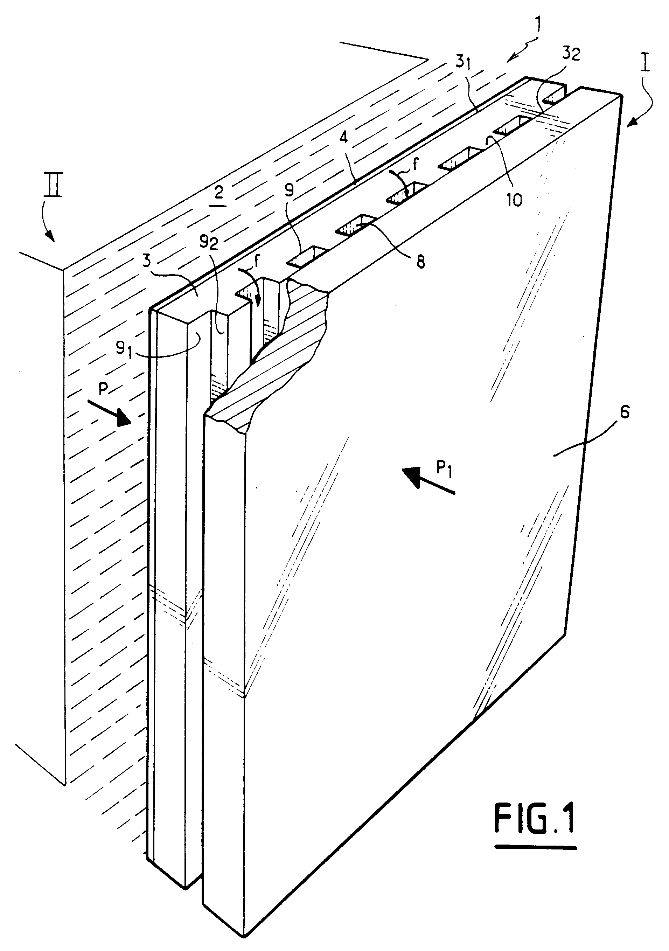

La **fig. 1** illustre un premier mode de réalisation d'une unité de filtration inorganique **1** conforme à l'invention, adaptée pour assurer la séparation ou la filtration de molécules ou de particules contenues dans un milieu liquide **2**, de nature diverse, comportant une phase solide ou non. L'unité de filtration **1** est composé d'un élément de filtration **I** et d'un élément **II** placé à distance et en regard de l'élément **I** pour assurer une circulation du milieu liquide **2** sous la forme d'une lame liquide. La hauteur **h** de cette lame liquide, qui est définie par des espaceurs de tout type connu en soi et non représentés, est comprise entre 0,1 et 3 mm et, de préférence, entre 0,2 et 1,5 mm. L'élément de filtration **I** comprend un support poreux ou perméable **3**, à caractère rigide ou non déformable, et constitué dans une matière dont la résistance au transfert est adaptée à la séparation à effectuer. Le support **3** est réalisé à partir de matériaux inorganiques, tels que des oxydes métalliques, du carbone ou des métaux. Selon l'invention, le diamètre moyen équivalent des pores du support **3** est compris entre 1 et 50 micromètres et, de préférence, entre 1 et 10 micromètres. Le terme "diamètre moyen équivalent de pores" est défini selon la technique dîte de porométrie mercure, qui détermine la valeur de ce diamètre comme correspondant à la moitié du volume total pénétré par le mercure. De préférence, l'épaisseur du support **3** est supérieure ou égale à 0,5 millimètre et inférieure à 6 millimètres.

Dans l'exemple illustré, le support poreux **3** se présente sous la forme d'une plaque ou d'un carreau comportant une face plane principale **3₁** à caractère, de préférence, lisse, de manière à être recouverte par au moins une couche séparatrice **4** destinée à être en contact avec le milieu liquide **2**. La nature de la ou des couches séparatrices **4** est choisie en fonction du pouvoir de séparation ou de filtration à obtenir et forme avec le support **3** une liaison intime, de manière que la pression **P** provenant du milieu liquide **2** soit transmise au support poreux **3**. Cette ou ces couches **4** peuvent être déposées à partir, par exemple, de suspensions contenant au moins un oxyde métallique et classiquement utilisées dans la production des éléments de filtration minéraux. Cette ou ces couches sont soumises, après séchage, à une opération de frittage qui permet de les consolider et de les lier entre-elles, ainsi qu'au support poreux **3**.

De préférence, les matières utilisées pour réaliser le dépôt de ces couches séparatrices sont des oxydes purs, tels que l'alumine Al₂O₃, l'oxyde de Zirconium ZrO₂, l'oxyde de titane TiO₂, l'oxyde de silicium SiO₂, ou des mélanges de ces oxydes purs, tels que (Al₂O₃ + TiO₂), (Al₂O₃ + SiO₂), (TiO₂ + SiO₂), (ZrO₂ + SiO₂), (ZrO₂ + TiO₂).

Ces mélanges définissent à chaque fois l'association d'un oxyde avec un oxyde moins réfractaire, ce qui permet de réduire les températures de frittage. Les proportions oxyde/oxyde moins réfractaires varient entre 100 et 1. En fonction de la granulométrie initiale, les diamètres moyens équivalents de ces couches sont compris entre 0,1 et 1,5 »m.

Les éléments de filtration réalisés ci-dessus sont utilisés pour des opérations de microfiltration mais, également, comme substrats pour des dépôts permettant d'obtenir des diamètres équivalents moyens beaucoup plus faibles et répertoriés comme mésoporeux :
2 nm à 90 nm.

Les matériaux utilisés pour ces dépôts mésoporeux sont des oxydes purs tels que : Al₂O₃, TiO₂, ZrO₂, SiO₂ ou des mélanges entre ces différents oxydes.

L'élément de filtration **I** comporte, également, un élément de contre-poussée **6** exerçant sur le support poreux **3**, une pression **P₁** antagoniste et sensiblement équivalente à la pression **P** appliquée sur la couche séparatrice **4**. A cet effet, l'élément **6** est appliqué, par tous moyens convenables non représentés, sur la face principale **3₂** du support poreux **3**, opposée à la face principale **3₁**. L'élément **6** de contre-poussée permet au support poreux **3** de travailler en compression quelle que soit sa surface d'échange, de sorte qu'il est possible de réaliser un support poreux de faible épaisseur présentant, néanmoins, une bonne résistance mécanique. A titre d'exemple non limitatif, il peut être envisagé de réaliser un support poreux **3** présentant une largeur et une longueur égales respectivement à 300 millimètres et une épaisseur égale à 3 millimètres. De préférence, le rapport de la longueur sur la largeur du support poreux **3** est compris entre 1 et 10, tandis que l'épaisseur de ce support est comprise entre 0,5 et 6 mm.

L'unité de filtration selon l'invention comporte, également, des moyens, tels qu'une cavité **8** ménagée à distance de la couche séparatrice **4** et adaptée pour récupérer le filtrat ayant traversé le support poreux **3** à partir de la couche séparatrice **4**. Le filtrat qui traverse le support poreux **3**, selon son épaisseur, à partir de la couche séparatrice **4**, débouche dans la cavité **8**, selon les flèches **f** pour être ensuite collecté ou récupéré à partir du chant ou des faces principales de l'unité de filtration par tous moyens appropriés.

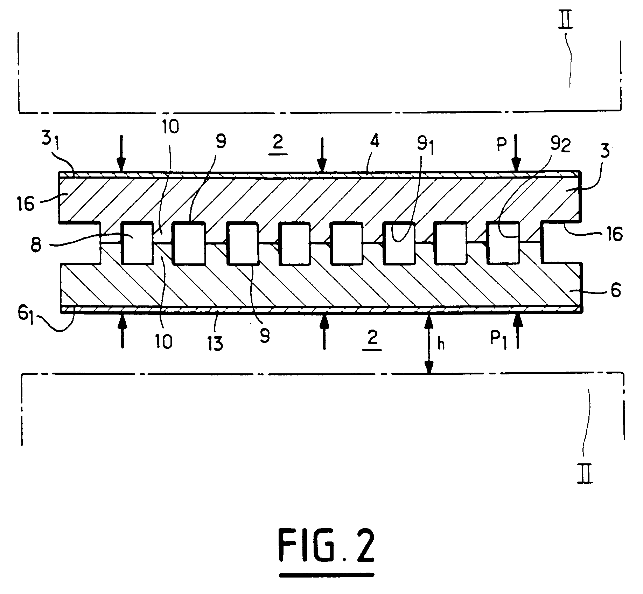

Selon un exemple de réalisation, la cavité de réception **8** est constituée par un réseau de canaux **9** ménagés dans la face principale **3₂** du support. Selon une caractéristique avantageuse de l'invention, chaque canal **9** comporte un fond plat **9₁** à partir duquel des flancs **9₂** s'élèvent selon une direction sensiblement perpendiculaire. Les canaux **9** possèdent ainsi une section droite transversale rectangulaire, comme cela apparaît plus précisément à la **Fig. 2**. Les canaux **9** laissent subsister entre-eux des appuis **10** sur lesquels vient en contact l'élément de contre-poussée **6**. Les appuis **10** sont adaptés pour assurer la résistance mécanique de l'élément de filtration, lorsque le support poreux **3** travaille en compression. En pratique, la section droite transversale des appuis et leur nombre sont définis de manière que la surface du support poreux, en dehors des appuis **10**, se déforme d'une quantité inférieure à la déformation de rupture. La surface occupée par ces appuis, correspondant au produit de leur nombre par leur section droite transversale, doit être la plus faible possible dans la limite de rupture donnée ci-dessus, afin d'éviter une réduction trop importante de la surface d'échange.

Il doit être considéré que la hauteur des appuis **10** n'influe pas sur la perte des performances, mais permet d'adapter l'écoulement du filtrat sans entraîner des pertes de charge qui s' opposeraient à la pression de transfert **P** et **P₁**. La hauteur des appuis **10** peut varier tout en conservant la surface d'échange constante. La hauteur des appuis **10** est définie de manière que la perte de charge d'écoulement du filtrat soit inférieure à 0,1 bar.

Selon un premier mode de réalisation, les canaux **9** sont ménagés pour s'établir sensiblement parallèlement entre eux, selon la longueur du support poreux.

Le profil des canaux **9** offre l'avantage de réduire le trajet du filtrat à travers le support poreux **3**, de manière à minimiser la perte de charge et, par suite, la résistance hydraulique moyenne de l'élément de filtration. Par ailleurs, la mise en oeuvre d'une surface plane **3₁** pour constituer la surface de filtration de l'élément **I** permet d'obtenir une unité possédant un débit important de filtration.

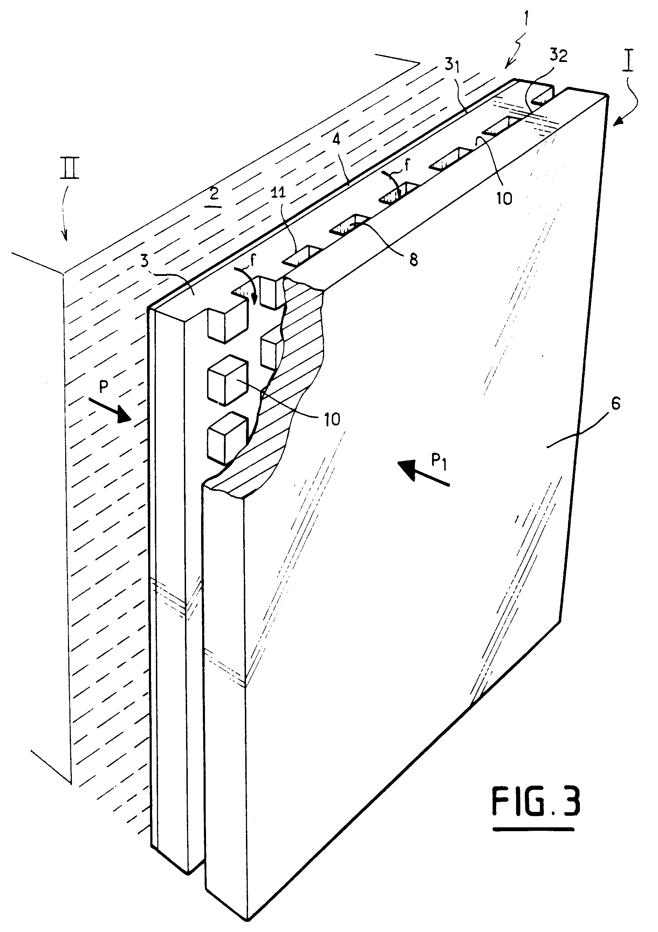

Selon un deuxième mode de réalisation illustré à la **fig. 3,** il peut être prévu de réaliser la cavité **8** de récupération du filtrat par l'intermédiaire de canaux **11** communiquant entre eux pour former un réseau entrecoisé de récupération du filtrat. Les canaux **11** laissent subsister des appuis localisés **10**, tels que des plots permettant un fonctionnement convenable de l'élément de filtration. Il est à noter que la section droite transversale des appuis **10** peut prendre une forme quelconque.

Selon une forme de réalisation particulièrement avantageuse illustrée à la **fig. 2**, l'élément de contre-poussée **6** est constitué par un support poreux complémentaire présentant une face plane externe principale **6₁** pourvue d'au moins une couche séparatrice **13** qui est destinée à être en contact avec le milieu liquide **2** à filtrer. L'élément de filtration ainsi réalisé, appelé communément paquet, comporte donc deux couches séparatrices planes **4, 13** opposées s'étendant de part et d'autre des supports poreux **3** et **6**. La couche séparatrice **13** est placée en relation d'un élément **II** assurant la circulation d'un milieu liquide à traiter sous la forme d'une lame. Le paquet ainsi constitué des supports poreux **3** et **6**, travaille en compression, car une pression de travail sensiblement équivalente s'exerce sur chacune des faces **3₁, 6₁** en contact avec le milieu liquide **2**. Le filtrat traverse les supports poreux **3** et **6**, à partir des couches séparatrices **4** et **13**, pour être ensuite récupéré par la cavité **8**. De préférence mais non exclusivement, le support poreux complémentaire **6** est identique au support poreux **3** et se trouve adapté de manière symétrique sur le support **3**, comme illustré à la **fig. 2**. Les appuis **10** des deux supports sont en contact mutuel, tandis que les canaux **9** d'un support s'étendent, chacun, en regard d'un canal de l'autre support, en vue de former une cavité **8** de capacité double par rapport à celle illustrée à la **fig. 1**. Le contact entre les appuis respectifs **10** peut être assuré par l'intermédiaire d'une soudure réalisée grâce au dépôt d'une couche de verre ou d'argile sur ces appuis et soumis ensuite à un traitement thermique. Bien entendu, il peut être envisagé de réaliser les canaux **9** de manière entrecoisée, afin que les appuis **10** se trouvent formés par des plots.

Le paquet ainsi réalisé offre l'avantage de comporter une double face servant pour le dépôt de couches séparatrices **4, 13** et d'être constituée à partir d'un support poreux unique **3** ou **6**, à caractère plan, pouvant être facilement fabriqué en continu. De plus, la configuration de ce paquet lui assure une bonne résistance mécanique, dans la mesure où les supports **3** et **6** travaillent en compression.

Il est à noter que le support poreux complémentaire **6** peut faire partie intégrante du support poreux **3**, afin de réaliser l'élément de filtration **I** sous une forme monobloc. Selon cette forme de réalisation, l'élément de filtration peut comporter des fils entrecoisés ou non, incorporés et destinés à être éliminés au cours du traitement thermique de frittage, en vue de réaliser la cavité **8**.

Tel que cela apparaît sur les figures, chaque support **3** ou **6** est pourvu de moyens d'assemblage, par exemple du type à emboîtement, permettant de constituer un paquet modulaire. A cet effet, il peut être prévu de ménager une languette **16** périmétrique le long des bords supports **3** ou **6**. Ces moyens d'assemblage **16** permettent de réaliser des unités de filtration de dimensions choisies en montant côte à côte le nombre désiré d'éléments **I** selon l'invention.

Un paquet comportant un support poreux et un support poreux complémentaire, lesquels sont revêtus d'une couche de diamètre moyen équivalent de pores de 5 nm, réalisé selon l'une des configurations planes, a été placé dans les deux contentions d'un appareil de laboratoire, normalement destiné à fonctionner à l'aide des membranes organiques planes. Dans le cas des membranes organiques, ces dernières sont disposées sur une plaque dont le rôle est d'assurer la résistante de travail. Lors de la mise en oeuvre du paquet selon l'invention, cette plaque est supprimée, de sorte qu'il apparaît une lame liquide de part et d'autre des couches **4, 13**. L'étanchéité entre ces couches et les éléments **II** est assurée de manière classique à l'aide de joints dont l'épaisseur est de 0,5 mm.

L'appareil est alors connecté à une pompe de circulation et le circuit est rempli avec une solution aqueuse de DEXTRAN T10 qui correspond à un polysaccharide de masse molaire 10000 Dalton. La concentration du DEXTRAN T10 est de 1 g/l. Le débit de circulation est réglé sur 200 l/h par lame liquide et la pression de travail est montée graduellement jusqu'à 4 bar.

Le filtrat qui s'est écoulé à travers les cavités est recueilli pour le doser par réfractomètrie. Sa teneur en DEXTRAN T10 est de 0,05 g/l. Cette valeur correspond à un taux de rétention de 95 %.

Cet exemple montre que l'objet de l'invention permet de résister à la pression de travail et d'obtenir une bonne efficacité de séparation.

Ainsi, tel que cela apparaît plus précisément à la **Fig. 2**, la hauteur **h** de la lame liquide du milieu à traiter **2** est définie entre les couches séparatrices **4** et **13** des faces **3₁** et **6₁** et les éléments **II** assurant la circulation du fluide sous la forme d'une lame liquide. Selon l'invention, cette hauteur **h** est comprise entre 0,1 et 3 mm et, de préférence, entre 0,2 et 1,5 mm. Il est à noter que si la hauteur **h** de la section de la lame liquide est très petite devant l'autre dimension, le diamètre hydraulique correspondant de cette lame liquide est assimilé au double de la hauteur **h**.

Selon une caractéristique avantageuse de l'invention, le ou les éléments **II** sont formés par un élément de filtration **I**, tel que défini ci-dessus.

## Revendications

1. Unité de filtration inorganique d'un milieu liquide en vue de récupérer un filtrat, l'unité comportant :
- au moins un élément de filtration (**I**) composé :
. d'un support poreux rigide inorganique (**3**) présentant une face (**3₁**) recouverte par au moins une couche séparatrice (**4**) destinée à être en contact avec le milieu liquide qui exerce sur celle-ci une pression donnée (**P**),
. un élément de contre-poussée (**6**) exerçant, sur le support (**3**), une pression (**P₁**) antagoniste et sensiblement équivalente à celle (**P**) appliquée sur la couche séparatrice (**4**),
. et d'au moins une cavité (**8**) ménagée dans le support poreux à distance de la couche séparatrice (**4**) et destinée à récupérer le filtrat ayant traversé le support poreux à partir de la couche séparatrice,
- et au moins un élément (**II**) permettant la circulation du milieu liquide (**2**)
caractérisée en ce que :
. le support poreux inorganique (**3**) présente une face plane (**3₁**) recouverte par la ou les couches séparatrices (**4**) liées entre-elles et au support poreux, par frittage,
. et en ce que l'élément (**II**) détermine, avec la face plane (**3₁**) de l'élément de filtration, une lame liquide de hauteur (**h**) comprise entre 0,1 et 3 mm et, de préférence, entre 0,2 et 1,5 mm.

2. Unité de filtration selon la revendication 1, caractérisée en ce que la ou les cavités (**8**) comportent un fond plat (**9₁**) à partir duquel des flancs (**9₂**) s'élèvent selon une direction sensiblement perpendiculaire, les cavités délimitant entre-elles des appuis (**10**) de réaction au travail en compression du support poreux.

3. Unité de filtration selon la revendication 2, caractérisée en ce que les cavités (**8**) communiquent entre-elles pour former un réseau entrecoisé de récupération du filtrat, délimitant des appuis (**10**).

4. Unité de filtration selon la revendication 1, caractérisée en ce que l'élément de contre-poussée (**6**) est constitué par un support poreux inorganique complémentaire, présentant une face externe plane (**6₁**) pourvue d'au moins une couche séparatrice (**13**) destinée à être en contact avec le milieu liquide à filtrer qui exerce sur celle-ci la pression antagoniste (**P₁**).

5. Unité de filtration selon la revendication 4, caractérisée en ce que le support poreux complémentaire (**6**) est identique au support poreux (**3**) et se trouve adapté de manière symétrique sur le support poreux (**3**), de sorte que les appuis (**10**) des deux supports soient en contact mutuel.

6. Unité de filtration selon la revendication 1 ou 5, caractérisée en ce que les appuis présentent une hauteur déterminée pour assurer un écoulement du filtrat avec une perte de charge inférieure à 0,1 bar.

7. Unité de filtration selon la revendication 4, caractérisée en ce que le support poreux complémentaire (**6**) fait partie intégrante du support poreux (**3**).

8. Unité de filtration selon la revendication 7, caractérisée en ce que le support poreux (**3** et **6**) comporte un treillis incorporé dont l'élimination permet de former la cavité (**8**) de récupération du filtrat.

9. Unité de filtration selon la revendication 1, caractérisée en ce que les supports poreux (**3, 6**) présentent chacun un rapport de leur longueur sur leur largeur compris entre 1 et 10, tandis que l'épaisseur est comprise entre 0,5 et 6 mm.

10. Unité de filtration selon la revendication 5, caractérisée en ce que les supports poreux (**3**) sont soudés entre eux au niveau de leurs appuis respectifs (**10**).

11. Unité de filtration selon la revendication 1, caractérisée en ce que le support poreux (**3**) présente des pores dont le diamètre moyen est compris entre 1 et 50 micromètres et, de préférence, entre 5 et 10 micromètres.

12. Unité de filtration selon la revendication 1, caractérisée en ce que le support poreux (**3**) est pourvu d'une ou de couches séparatrices (**4, 13**) comportant des pores dont les diamètres équivalents sont compris entre 0,1 et 1,5 micromètres.

13. Unité de filtration selon la revendication 12, caractérisée en ce que la ou les couches séparatrices (**4, 13**) sont recouvertes par une couche séparatrice complémentaire dont les diamètres moyens équivalents sont compris entre 2 et 90 nm.

14. Unité de filtration selon la revendication 1, caractérisée en ce que les couches séparatrices sont réalisées par le dépôt d'oxydes purs, tels que Al₂O₃, TiO₂, ZrO₂, SiO₂ ou des mélanges de ces oxydes purs, tels que (Al₂O₃ + TiO₂), (Al₂O₃ + SiO₂), (TiO₂ + SiO₂), (ZrO₂ + TiO₂).

15. Unité de filtration inorganique selon la revendication 1, caractérisée en ce que l'élément (**II**) assurant la circulation du liquide est constitué par un élément de filtration inorganique (**I**) conforme à l'invention.

## Claims

1. Inorganic unit for the filtration of a liquid medium in order to recover a filtrate, the unit comprising:
- at least one filter element (I) composed of:
. an inorganic rigid porous support (3) having a face (3₁) covered with at least one separating layer (4) intended to be in contact with the liquid medium, which exerts a given pressure (P) on said separating layer,
. a counter-thrust element (6) exerting, on the support (3), an opposing pressure (P₁) approximately equivalent to that (P) applied to the separating layer (4),
. and at least one cavity (8) made in the porous support at a distance from the separating layer (4), the purpose of said cavity being to recover the filtrate which has passed through the porous support from the separating layer,
- and at least one element (II) for the circulation of the liquid medium (2), characterized in that:
. the inorganic porous support (3) has a plane face (3₁) covered by the separating layer or layers (4) bonded to one another and to the porous support by sintering,
. and in that the element (II) determines, with plane face (3₁) of the filter element, a sheet of liquid of height (h) comprised between 0.1 and 3 mm and, preferably, between 0.2 and 1.5 mm.

2. Filtration unit according to claim 1, characterized in that the cavities (8) have a flat bottom (9₁) from which sides (9₂) rise up in an approximately perpendicular direction, the cavities delimiting between one another bearings (10) for reacting to the working of the porous support under compression.

3. Filtration unit according to claim 2, characterized in that the cavities (8) communicate with one another to form a criss-cross filtrate recovery network delimiting bearings (10).

4. Filtration unit according to claim 1, characterized in that the counter thrust element (6) consists of a complementary inorganic porous support having a plane external face (6₁) provided with at least one separating layer (13) intended to be in contact with the liquid medium to be filtered, which exerts the opposing pressure (P₁) on said separating layer.

5. Filtration unit according to claim 4, characterized in that the complementary porous support (6) is identical to the porous support (3) and is symmetrically fitted on the porous support (3), so that the bearings (10) of the two supports are in mutual contact.

6. Filtration unit according to claim 1 or 5, characterized in that the height of the bearings is determined so as to ensure that the filtrate flows with a pressure loss of less than 0.1 bar.

7. Filtration unit according to claim 4, characterized in that the complementary porous support (6) forms an integral part of the porous support (3).

8. Filtration unit according to claim 7, characterized in that the porous support (3 and 6) incorporates a mesh, the removal of which makes it possible to form the filtrate recovery cavity (8).

9. Filtration unit according to claim 1, characterized in that the porous supports (3, 6) each have a length /width ratio of between 1 and 10, the thickness being between 0.5 and 6 mm.

10. Filtration unit according to claim 5, characterized in that the porous supports (3) are welded to one another at their respective bearings (10).

11. Filtration unit according to claim 1, characterized in that the pores in the porous support (3) have a mean diameter of between 1 and 50 micrometers and preferably of between 5 and 10 micrometers.

12. Filtration unit according to claim 1, characterized in that the porous support (3) is provided with one or more separating layers (4, 13) whose pores have equivalent diameters of between 0.1 and 1.5 micrometers.

13. Filtration unit according to claim 12, characterized in that the separating layers (4, 13) are covered with a complementary separating layer having equivalent mean diameters of between 2 and 90 nm.

14. Filtration unit according to claim 1, characterized in that the separating layers are produced by the deposition of pure oxides, such as AL₂O₃, TiO₂, ZrO₂, SiO₂, or mixtures of these pure oxides, such as (AL₂O₃ + TiO₂), (Al₂O₃ + SiO₂), (TiO₂ + Sio₂), (ZrO₂ + TiO₂).

15. Inorganic filtration unit according to claim 1, characterized in that the element (II) for the circulation of the liquid consists of a inorganic filter element (I) according to the invention.

## Patentansprüche

1. Anorganische Filtrationseinheit für ein flüssiges Medium zum Auffangen eines Filtrats, die:
- mindestens ein Filtrationselement (I), bestehend aus
- einem anorganischen, starren, porösen Träger (3) mit einer Seite (3₁), die mit mindestens einer Trennschicht (4) überzogen ist, welche dazu gedacht ist, mit dem flüssigen Medium in Berührung zu stehen, das auf diese einen gegebenen Druck (P) ausübt,
- einem Gegendruckelement (6), das auf den Träger (3) einen Druck ausübt, der dem auf die Trennschicht (4) wirkenden Druck (P) entgegenwirkt und im wesentlichen gleich groß wie dieser ist,
- und mindestens einer Aussparung (8), die in dem porösen Träger in Abstand zu der Trennschicht (4) ausgeführt ist und dazu gedacht ist, das Filtrat aufzufangen, das von der Trennschicht aus den porösen Träger durchquert hat,
- und mindestens ein Element (II), das die Zirkulation des flüssigen Mediums (2) ermöglicht,
aufweist,
dadurch gekennzeichnet, daß der anorganische poröse Träger (3) eine ebene Seite (3₁) aufweist, die mit der oder den Trennschicht(en) (4) überzogen ist, welche miteinander und mit dem porösen Träger durch Sintern verbunden sind, und daß das Element (II) mit der ebenen Seite (3₁) des Filtrationselements einen Flüssigkeitsstreifen mit der Höhe (h) von 0,1 bis 3 mm und vorzugsweise von 0,2 bis 1,5 mm bildet.

2. Filtrationseinheit nach Anspruch 1,
dadurch gekennzeichnet, daß die Aussparung oder Aussparungen (8) einen flachen Boden (9₁) aufweisen, von dem sich Seitenteile (9₂) im wesentlichen senkrecht dazu erheben, wobei die Aussparungen zwischen sich Anlageflächen (10) für die Reaktion auf die Arbeit des porösen Trägers unter Druck umgrenzen.

3. Filtrationseinheit nach Anspruch 2,
dadurch gekennzeichnet, daß die Aussparungen (8) miteinander in Verbindung stehen, um ein sich kreuzendes Netz zum Auffangen des Filtrats zu bilden, wobei sie die Anlageflächen (10) umgrenzen.

4. Filtrationseinheit nach Anspruch 1,
dadurch gekennzeichnet, daß das Gegendruckelement (6) aus einem komplementären anorganischen, porösen Träger besteht, der eine ebene Außenseite (6₁) aufweist, die mit mindestens einer Trennschicht (13) versehen ist, die dazu gedacht ist, mit dem zu filternden flüssigen Medium in Berührung zu stehen, das auf diese den Gegendruck (P₁) ausübt.

5. Filtrationseinheit nach Anspruch 4,
dadurch gekennzeichnet, daß der komplementäre poröse Träger (6) dem porösen Träger (3) gleicht und symmetrisch an den porösen Träger (3) angepaßt ist, so daß sich die Anlageflächen (10) der beiden Träger miteinander in Berührung befinden.

6. Filtrationseinheit nach Anspruch 1 oder 5,
dadurch gekennzeichnet, daß die Anlageflächen eine bestimmte Höhe aufweisen, um ein Abfließen des Filtrats mit einem Druckverlust von weniger als 0,1 Bar zu gewährleisten.

7. Filtrationseinheit nach Anspruch 4,
dadurch gekennzeichnet, daß der komplementäre poröse Träger (6) ein integrierter Bestandteil des porösen Trägers (3) ist.

8. Filtrationseinheit nach Anspruch 7,
dadurch gekennzeichnet, daß der poröse Träger (3 und 6) ein eingebautes Geflecht enthält, durch dessen Entfernung die Aussparung (8) zum Auffangen des Filtrats gebildet werden kann.

9. Filtrationseinheit nach Anspruch 1,
dadurch gekennzeichnet, daß die porösen Träger (3, 6) jeweils ein Verhältnis von Länge zu Breite aufweisen, das zwischen 1 und 10 liegt, während die Dicke zwischen 0,5 und 6 mm beträgt.

10. Filtrationseinheit nach Anspruch 5,
dadurch gekennzeichnet, daß die porösen Träger (3) an ihren jeweiligen Anlageflächen (10) aneinandergeschweißt sind.

11. Filtrationseinheit nach Anspruch 1,
dadurch gekennzeichnet, daß der poröse Träger (3) Poren aufweist, deren durchschnittlicher Durchmesser zwischen 1 und 50 Mikrometer und vorzugsweise zwischen 5 und 10 Mikrometer beträgt.

12. Filtrationseinheit nach Anspruch 1,
dadurch gekennzeichnet, daß der poröse Träger (3) mit einer oder mehreren Trennschichten (4, 13) versehen ist, die Poren aufweisen, deren Durchmesser gleich sind und zwischen 0,1 und 1,5 Mikrometer betragen.

13. Filtrationseinheit nach Anspruch 12,
dadurch gekennzeichnet, daß die Trennschicht oder Trennschichten (4, 13) mit einer komplementären Trennschicht überzogen sind, deren durchschnittliche Durchmesser gleich sind und zwischen 2 und 90 nm betragen.

14. Filtrationseinheit nach Anspruch 1,
dadurch gekennzeichnet, daß die Trennschichten durch das Ablagern von reinen Oxiden, wie z. B. Al₂O₃, TiO₂, ZrO₂, SiO₂, oder Gemischen mit diesen reinen Oxiden, wie z. B. (Al₂O₃ + TiO₂), (Al₂O₃ + SiO₂), (TiO₂ + SiO₂), (ZrO₂ + TiO₂), hergestellt werden.

15. Filtrationseinheit nach Anspruch 1,
dadurch gekennzeichnet, daß das Element (II), das die Zirkulation der Flüssigkeit gewährleistet, aus einem erfindungsgemäßen anorganischen Filtrationselement (I) besteht.
